# EUROPEAN PATENT SPECIFICATION

(11) **EP 4 295 322 B1**
(45) Date of publication and mention of the grant of the patent: **19.08.2026**
(21) Application number: 22703294.3
(22) Date of filing: 19.01.2022
(51) Int. Cl.: G06V 20/52, G06V 10/25, G06V 10/82

(54) **METHOD FOR DETECTING THE OCCUPATION OF A ROOM AND DETECTOR FOR SUCH A METHOD**
VERFAHREN ZUR ERKENNUNG DER BELEGUNG EINES RAUMES SOWIE DETEKTOR FÜR EIN SOLCHES VERFAHREN
PROCÉDÉ DE DÉTECTION DE L'OCCUPATION D'UNE PIÈCE ET DÉTECTEUR POUR UN TEL PROCÉDÉ

(30) Priority: 16.02.2021 FR 2101468
(43) Date of publication of application: 27.12.2023
(73) Proprietor: Essilor International, 94220 Charenton-le-Pont (FR)
(72) Inventor: BIJAR, Ahmad, 38240 MEYLAN (FR); PACI, Francesco, 38000 GRENOBLE (FR)
(74) Representative: Korakis-Ménager, Sophie
(86) International application number: PCT/EP2022/051126
(87) International publication number: WO 2022/175008

(56) References cited:
- US-A1- 2019 294 889
- US-B2- 10 579 875
- US-B2- 9 959 651
- BI SONG ET AL: "Distributed Camera Networks", IEEE SIGNAL PROCESSING MAGAZINE, IEEE, USA, vol. 28, no. 3, 1 May 2011 (2011-05-01), pages 20 - 31, XP011354676, ISSN: 1053-5888, DOI: 10.1109/MSP.2011.940441

## Description

### FIELD OF INVENTION

The field of the invention is that of the technical management of buildings or home automation. More specifically, the invention relates to a presence detector and to a process for detecting the occupation of a room or a plurality of rooms in a building.

### TECHNOLOGICAL BACKGROUND OF THE INVENTION

Large buildings and industrial sites are generally equipped with a large number of equipment, of various kinds, which allow the building or site to be occupied and functional. For example, these equipment's may include means for heating and ventilating, lighting, means for securing access to some of these rooms, and incident (fire) detectors. It is sometimes planned to connect at least some of these equipments to a computerized supervision system in order to have centralized management of equipment and buildings. This supervision system can be located on the site itself, or remotely from the site, for example to provide a "cloud" supervision solution. In this context, presence detection (also called occupancy detection or absence detection) is a technology that uses sensors placed in the rooms of the supervised building whose role is to detect the presence (or absence) of humans and, sometimes, to provide a count of the number of people present in a room and in the building. It is also possible, in certain cases, to provide the respective positions of these persons, when at least one is present. This presence, absence, count and/or position information (generally referred to as room occupancy detection in this application) can be advantageously exploited by the computerized supervision system to control the operation of certain equipment, for example for energy conservation or security purposes.

Document EP3617933A1 discloses an example of a room occupancy detector using a plurality of passive infrared sensors, each sensor being able to provide binary information identifying the presence or absence of a person in its field of measurement. The signals provided by these sensors are supplied to a classifier configured by learning to establish the count of people present in the room. Other examples of prior art concerning occupancy detection are US2019/294889A1 (NVIDIA Corp.), published on 26-09-2019 and US9959651B2 (CANON KK) published on 01-05-2018.

When the number of sensors is relatively small, there is a risk of forming white areas or being unable to discriminate between the presence of several persons in the measuring field of a sensor. If, on the other hand, a relatively large number of sensors are densely positioned in the room, it is possible that several sensors detect the presence of the same person. Therefore, the solution proposed by the above-mentioned document remains imprecise.

### OBJECT OF THE INVENTION

The invention is defined by the appended claims.

A purpose of the invention is to propose a method for detecting the occupancy of a room and an occupancy detector that can implement this method, overcoming at least some of the limitations of the state of the art. More particularly, one purpose of the invention is to provide a reliable solution for the detection of persons present in a room, i.e. a solution more precise than that proposed by the state of the art in the counting of persons present and/or in their location.

### SHORT DESCRIPTION OF THE INVENTION

To this effect, the invention relates to a method for detecting occupancy of a according to claim 1.

According to the invention, the method comprises:
- a step of preparing a plurality of zenithal images of the room, the plurality of images being prepared by a plurality of image sensors respectively part of the plurality of detectors, at least some of the image sensors having overlapping fields of view;
- a step of locating persons in zones of the plurality of images to establish a first series of zones, each zone located in an image being defined by pixel parameters in a coordinate system linked to that image;
- a step of transforming the pixel parameters of the zones of the first series of zones using the detector parameters, to establish second parameters of the zones of the first series of zones, these second parameters being defined in a coordinate system linked to the room; and
- a step of disambiguation of overlapping zones of the first series of zones by processing the second parameters to provide a second series of zones, the second series of zones being representative of the number and of the position of the persons occupying the room.

According to further non-limitative features of the invention, either taken alone or in any technically feasible combination:
- the pixel parameters of a zone located in an image comprise the coordinates of a reference point of a bounding box in the image and at least one dimension of the bounding box;
- the at least one dimension comprises width, height and/or orientation angle of the bounding box;
- the pixel parameters of a zone located in an image also include a degree of presumption of the presence of a person in the bounding box;
- the locating step is implemented by at least one classifier receiving as input at least one image of the plurality of images and providing as output the pixel parameters of at least one zone located in this image;
- the classifier is a neural network of the SSD or YOLO type;
- the method comprises a plurality of classifiers implemented by a plurality of processing circuits of the plurality of detectors, a classifier implemented by a processing circuit of a given detector receiving as input an image provided by the given detector image sensor and providing as output the pixel parameters of at least one zone in this image;
- the detectors each comprise a transmission interface connected to a processing unit of the computer system, the processing unit being configured to implement at least the disambiguation step;
- the method further comprises a step of transmitting the pixel parameters of the zones identified by the plurality of detectors to the processing unit;
- the method further comprises an initialization step of transmitting the detectors parameters to the processing unit and wherein the processing unit is configured to perform the transformation step;
- the processing circuit is also configured to implement the transformation step and the detection method comprises the transmission of the second parameters to the processing unit;
- at least some of the plurality of detectors include an attitude sensor, the attitude sensor establishing at least a portion of the sensor parameters;
- the disambiguation step implements a non-maximum suppression method.

The invention relates to a room occupancy detector according to claim 12.

According to further non-limitative features of this aspect of the invention, either taken alone or in any technically feasible combination:
- the processing circuit is also configured to transform the pixel parameters of a zone, based upon the detector parameters, into second parameters of the zone, these second parameters being defined in a coordinate system linked to the room;
- the pixel parameters of a zone located in an image include the coordinates and at least one dimension of a bounding box of the image;
- the pixel parameters of a zone located in an image also include a degree of presumption of the presence of a person in the bounding box;
- the processing circuit implements a classifier, for example a neural network of the SSD or YOLO type.

### SHORT DESCRIPTION OF THE FIGURES

Other characteristics and advantages of the invention will be shown in the detailed description of the invention which will follow with reference to the annexed figures on which:
Figure 1 represents a computer system for implementing a detection process in accordance with the invention;
Figure 2 shows the location of a detector in a world-related coordinate system;
Figure 3 schematically represents the architecture of a detector conforming to an aspect of the invention;
Figure 4 schematically represents a classifier that can be implemented by a detector processing circuit according to one aspect of the invention;
Figure 5 shows a projection on the floor of the detector's fields of view in the room shown in Figure 1;
Figures 6a to 6d represent the successive steps of a detection process according to one aspect of the invention.

### DETAILED DESCRIPTION OF THE INVENTION

### General presentation of the computer system

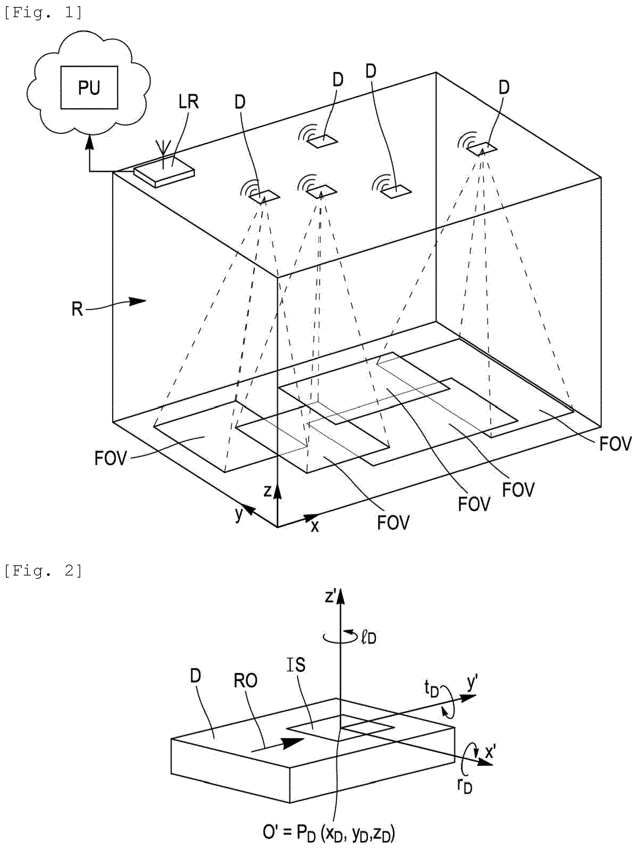

Figure 1 represents a computer system for implementing a process for detecting the occupancy of a room R in accordance with the invention. It is recalled that, in the context of the present description, in addition to a simple detection of the presence or absence of a person, such an occupancy detection may also correspond to the counting of the number of persons in this room R and/or the location of these persons.

For the sake of simplification, the computer system of Figure 1 has been represented to equip a single room R of a building, but the invention applies to any enclosed space (e.g. a building), whether this space is composed of one room or a plurality of such rooms, and even to the detection of the occupancy of an open space (e.g. a stadium, a garden). The term "room" therefore very generally refers to any space likely to be occupied by persons and whose occupancy is to be monitored.

The computer system is composed of a plurality of detectors D, distributed in zenithal position in the room R, fixed for instance to the ceiling of the room R (or placed for example on masts if the room is an open space). As it will be detailed in the rest of this description, each detector D is equipped with an image sensor whose optical axis is oriented towards the floor of the room R, the field of view of each image sensor thus intercepting the floor to define an exposed surface FOV on the floor. It is very generally sought that the agglomeration of the exposed surfaces FOV covers the floor as completely as possible, at least in the parts of the room R which are likely to be occupied by people, so as not to leave any "white zone". This often leads to the fields of view (and thus to the exposed surfaces FOV of the floor) of the image sensors of some detectors D to overlap, as this can be seen in Figure 1. The exposed surfaces FOV can typically have, depending on the nature of the image sensor (including the focal length of its optics) and the height of the detector D, ground dimensions comprised between 1m^2 and 25m^2.

In a very general way, the invention aims at exploiting, by means of computer vision processing techniques, the images provided by the network of detectors D arranged in the room R according to the arrangement just described, so as to locate persons. In this way, taking into account the overlapping fields of view of certain detectors D, it is possible to count and/or locate the number of persons occupying the room, without necessarily deploying a large number of D detectors.

For this purpose, the detectors D comprising the image sensors are connected to a processing unit PU of the computer system, which is arranged here "in the clouds". This processing unit PU is equipped, in a completely conventional manner, with elementary processing components (CPU, memory, input/output interfaces, etc.) arranged together to implement a wide variety of computer processing operations, in particular those described in the rest of this description. The computer resources of the system (i.e. at least the detectors D and the processing unit PU) collaborate to implement the process of detecting the occupancy of the room R. Other configurations of the computer system can of course be envisaged. For example, a local router LR, as in the configuration shown in Figure 1, or a plurality of such routers can be used to aggregate the information provided by the detectors D before transmitting them to the processing unit PU. The processing unit PU is not necessarily located at a great distance from the building, and it may reside in the room R itself, or in another room of the building.

The computer system allows to synchronize the images acquisition by the detectors D, so that those images are representative of the occupancy of the room R at a given time. This may involve configuring or communicating a common clock to all the detectors D, an instant or instants of images acquisition being planned in advance in relation to this clock, i.e. at a fixed time. Alternatively, trigger events for image acquisitions may be simultaneously addressed to the detectors D. The image acquisition can be repeated in time, for example at a frequency of between 1 time per second and 1 time per hour, in order to continuously establish the room occupancy or the number of persons occupying the room. Regardless of how the images capture is synchronized and at what rate it is repeated, these processes of synchronization and repetition may be implemented by a computer routine running on the processing unit PU, on a local router LR or any other computing element composing the computer system.

With reference to figures 1 and 2, a detector D equipping the room R is characterized by its position and attitude in a coordinate system linked to this room (0, x, y, z), referred to as the "world coordinate system" or "coordinate system linked to the room". Thus, the position P_{D} of a detector D is determined by its coordinates (x_{D}, y_{D}, z_{D}) in this coordinate system. This corresponds typically the position of the detector D according to the length, width and height in the room R, when the coordinate system is aligned along the sides of the room as shown in Figure 1. More generally, the Oz axis of the room is vertical, and the Ox, Oy axes are horizontal and perpendicular to each other. The attitude A_{D} of the detector D in this coordinate system is determined by angles called roll r_{D}, pitch t_{D} and yaw l_{D}, these angles being respectively defined by the angular orientation around the Ox, Oy and Oz axes of a coordinate system (O, x', y', z') linked to the detector D. Preferably, this coordinate system is positioned to reside in an image plane of the image sensor, and will be referred to as "coordinate system linked to the image linked to the image" in the rest of this description. In addition, at least the position P_{D} (x_{D}, y_{D}, z_{D}) and the attitude A_{D} (r_{D}, t_{D}, l_{D}) of a detector D in the coordinate system linked to the room will be referred to as "detector parameters", along with, preferably, the other "intrinsic" parameters of the image sensor.

The occupancy detection processes implemented by the computer system require the image sensors of the detectors D array to be calibrated, i.e. to determine the point transformation existing between a pixel of an image prepared by the image sensor of a given detector D and a point defined in the coordinate system linked to the room. This transformation includes the application of a translation in position and a rotation in attitude in order to match the coordinate system linked to the image and the coordinate system linked to the room. The translation and the rotation to be applied to calibrate a detector D are given by the parameters P_{D}, A_{D} of this detector D.

As this is well known, further parameters may be useful to precisely define the point transformation between a pixel and a point defined in the coordinate system linked to the room. Such further parameter includes the so-called intrinsic parameters of the image sensor (focal length, optical center and skew coefficients) that define the projection of the coordinate system linked to the room into the coordinate system linked to the image (array of pixel). Such further parameters also include the lens distortion parameters, that are used to compensate for the distortion brought by the lens associated with the image sensor.

For this calibration purpose, the position and attitude parameters P_{D}, A_{D} of each detector D (and more generally all the calibration parameters) are stored in the computer system, for example in a file, or a database, held on the processing unit PU or on a local router LR. Alternatively, these parameters can be respectively stored in the detectors D.

Some of these parameters can be determined visually when installing the detectors in the room R. In particular, the position P_{D} of detector D and its yaw angle l_{D} can be easily measured to within a few centimeters or a few degrees without this imprecision affecting the detection results. With regard to the yaw angle l_{D}, the installation of a detector D in a room may require a visual orientation mark RO placed on the D detectors (visible in figure 2) to be oriented in a certain direction, so that the explicit measurement of this angle is not necessary, but considered as an imposed value.

Other parameters of the detectors D, however, must be determined more precisely than by a simple visual inspection or measurement, as the detection result may be particularly sensitive to the accuracy of their values. These include the roll angle r_{D} and pitch angle t_{D}, which determine the direction of the image sensor optical axe. These angles affect the image sensor's field of view all the more that the detector is far from the floor of the room. To address this problem, a detector D according to the invention is equipped with an attitude sensor capable of determining with sufficient accuracy, preferably less than 1° or less than 2°, these roll and pitch angles, as detailed in the following section of this description.

For the intrinsic and lens distortion parameters, it is possible to use predetermined values, for instance default values provided by the manufacturer. Advantageously however, the determination of these values may be determined individually for each detector D with greater accuracy before the installation of the detectors in the room, and stored in the computer system as mentioned before. For the purpose of the present description, these parameters will be considered as available and used in all transformation that will be applied on the images.

### Detector

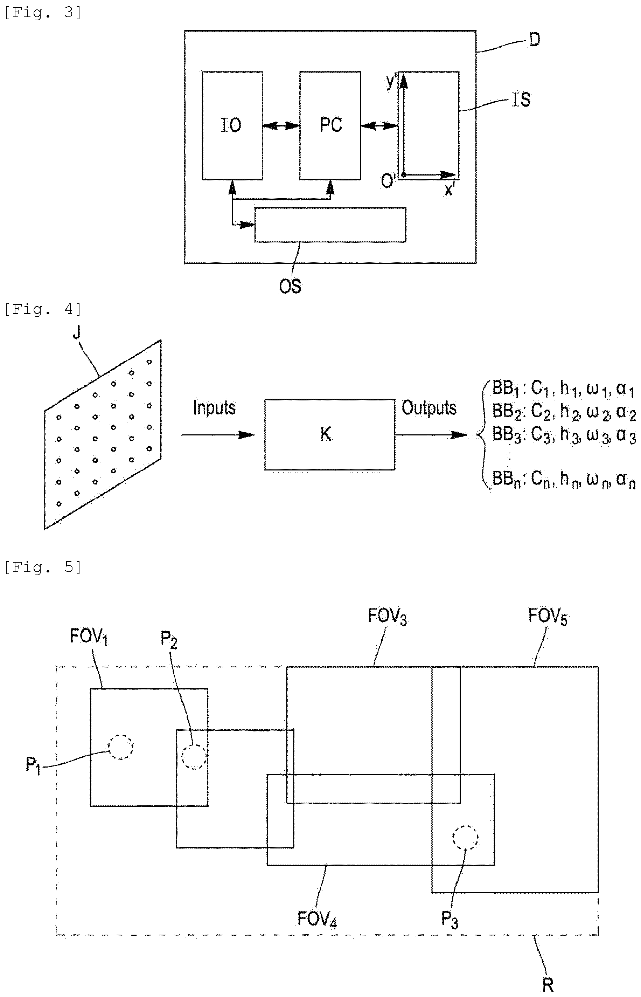

The internal architecture of a detector D according to an aspect of the invention is represented in Figure 3. As already stated, it comprises an image sensor IS capable of forming an image of the environment disposed in its field of view, i.e. the portion of space perceived by this IS sensor when its optical axis is oriented in a given direction. As is well known per se, an image established by such a sensor is formed of a plurality of pixels, arranged in rows and columns. A point of this image can thus be located by its rank, according to a line and a column of pixels, in the coordinate system linked to the image (O', x', y'). More generally, a portion of an image (also called a "zone" in this application) can be defined by pixel parameters in this coordinate system linked to the image, for example the coordinates of the center of the zone, and a main dimension (in pixels) of the extent of the zone, for example a diameter or a side, depending on the shape of the zone.

The image sensor IS can operate in a wide variety of spectral bands but, advantageously and to facilitate the detection of persons in an image, the image sensor IS operates in the infrared. Each pixel may be defined by a single value (grey level or intensity level) or by a plurality of values (for instance RGB values).

Detector D in Figure 3 also includes a processing circuit PC, which is functionally connected to the image sensor IS. The images captured by the image sensor IS are supplied to the processing circuit PC, and the processing circuit PC is configured to identify at least one zone in the image that is likely to contain a person. This configuration can be implemented in hardware and/or in software, and in the latter case a software program is executed on the elementary circuits (microcontroller, memory, etc.) that make up the processing circuit PC.

The treatment of locating persons in the image operated by the processing circuit PC can be implemented by a classifier K, e.g. a neural network of the SSD or YOLO type, configured by training from reference images. Such a classifier, as shown schematically in Figure 4, receives as input (typically via convolution layers) the image I prepared by an image sensor IS, and provides as output groups of parameters BBᵢ (i=1 to n), each group defining a zone of the I image that may contain a person. One can refer to the abundant literature in the field to realize such a classifier, for example to the article "SSD: single shot multibox detector", Wei Liu et al, Computer Vision - ECCV 2016. ECCV 2016. Lecture Notes in Computer Science, vol 9905. Springer, Cham.

It is usual to define zones located by these methods as a bounding box in the image, such a box being defined by the coordinates cᵢ (in the matrix of pixels forming the image) of the center of the box, at least one dimension (side or width wᵢ and height hᵢ of the area, expressed in pixels) of this box. Other representations are possible. It is also possible, for more precision, to include additional parameters, such as the orientation of the box in the image, for example the angle formed by one side of the zone with respect to a reference direction in the image I coordinate system.

In all cases, and regardless of the way in which a bounding box is defined in the image I by the classifier K, such a box is defined by parameters BBᵢ, called "pixels parameters", in a coordinate system linked to the image I.

When the detection of a person in the image is implemented by a classifier K, the classifier typically exhibits a plurality of output groups. Each output group provides the pixel parameters BBᵢ of a zone located in the image, on respective outputs of the group, for example the coordinates of a center cᵢ, a width wᵢ and a height hᵢ of a bounding box, as shown in Figure 4 for the n groups of parameters BB₁,...,BBₙ. The pixel parameters BBᵢ may also include a degree αᵢ of presumption of the presence of a person in the located area. Typically, 20 to 40 or more output groups can be provided so that the classifier K can identify 20 to 40 zones in the image that are likely to contain a person. Only those zones for which the degree αᵢ of presumption of the presence of a person is greater than a certain threshold may be retained, for example greater than 0.5 when the degree of presumption is measured between 0 and 1.

In any case, the processing circuit PC of a detector D according to the invention is capable of establishing zones of the image provided by the image sensor IS, these zones being defined by pixel parameters in the coordinate system linked to the image, each zone being likely to contain a person. The processing circuit PC may have other functions, such as coordinating the various elements making up the detector, or controlling the image sensor IS, for example to trigger the capture of an image. Alternatively, these additional functions can be implemented by a dedicated microcontroller of the detector D, connected to the different elements composing such detector D.

Pursuing the description of figure 3, the processing circuit PC is functionally connected to a transmission interface I/O that allows the direct or indirect communication of a detector D with the processing unit PU. In this way, information collected individually by the detectors D, such as the pixel parameters BBᵢ of the identified zones in an image, can be transmitted to this processing unit PU. As a corollary, the processing unit PU can transmit information to each detector D of the computer system, e.g. for configuration purposes. This networking of the detectors D and of the processing unit PU can be implemented using any suitable protocol. The connection between the detectors D and the processing unit PU can be wired or wireless. For example, the detectors D can be individually wired to a local router LR. This router is able to aggregate the transmitted information and transmit them to the processing unit PU via a network, e.g. the Internet. Rather than wiring the detectors D to the local router, it may be preferable to connect these detectors D to the router via a short-distance wireless link such as Bluetooth^{™}, in order to facilitate the installation of the computer system. Alternatively, the transmission interfaces I/O of the detectors D are able to operate a long-distance wireless transmission and thus to transmit the collected data to the processing unit PU without the need for a local router. Such a long-distance wireless link can, for example, use LORA, SIGFOX or 5G technology.

According to an important characteristic of a detector D according to the invention, and as briefly presented in the detector section, the detector D includes an attitude sensor OS, i.e. a sensor capable of determining the orientation of the detector D (and thus of the IS image sensor) in space, in the world coordinate system. The sensor can be a micro electromechanical system (MEMS) capable of providing static attitude information (roll, pitch and yaw angles) typically with an accuracy of less than 2° or 1°, or even less than 0.5°. The attitude sensor OS is at least connected to the transmission interface OS, so that the attitude parameters A_{D} provided by this sensor OS can be communicated to the processing unit PU of the computer system for storage. This communication can be carried out at the initialization of the detector D, e.g. during its start-up sequence, or upon express request of the processing unit PU.

Naturally, the detectors D are equipped with components to ensure their power supply, for example connectors for connection to a power supply network and/or energy storage element.

### Method for detecting the occupancy of a room

The detection method takes advantage of the computer system just described, which includes the processing unit PU and the plurality of detectors D distributed in zenithal position in the room. At least some of the fields of view of the image sensors IS of the detectors D overlap, as shown in Figure 1. The projection on the floor of the fields of view of the detectors D equipping the room R shown in Figure 1 is shown in Figure 5, these projections forming 5 exposed surfaces FOV1-FOV5, corresponding to the 5 detectors D of Figure 1. In this Figure 5, 3 persons P1, P2, P3 occupying the room R are symbolized by dotted circles.

During the physical installation of the detectors D in the room R, their respective positions P_{D} were measured. The detectors D were also positioned in the room R at a given yaw angle l_{D}, e.g. with the aid of the provided visual marker RO. These positions and yaw orientation data, which form part of the detector parameters, are stored in the computer system. In a preliminary initialization phase of the computer system, the detectors D can also transmit their attitude parameters, especially their pitch t_{D} and their roll r_{D} angles, to the computer system, so that all the detector parameters (including position and attitude) are stored and available in the computer system, e.g. at the processing unit PU. Other approaches to gather and store the detector parameter in the computer system are possible, for instance the yaw angle l_{D} provided by the attitude sensor AS may be used instead of considering this angle as a fixed and predefined value.

The detection method includes a first step of preparing a plurality of zenithal images of the room, the plurality of images being prepared by the plurality of image sensors IS that are respectively part of the plurality of detectors D. These images are prepared at a given instant, this instant being coordinated by means of a common clock or triggered by an event broadcast in the computer system, as previously mentioned.

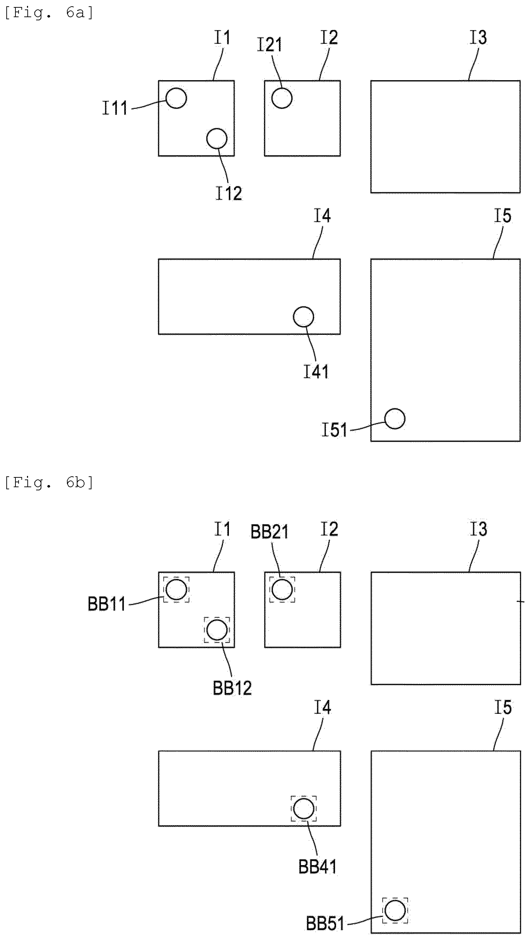

Figure 6a represents the 5 images I1 to I5 whose acquisition was carried out by the 5 image sensors IS of the 5 detectors D equipping the room R of figures 1 and 5. These images, in particular when they were prepared from infrared image IS sensors, exhibit an increased intensity in zones I11, I12, I21, I41, I51 corresponding to a location of a person. It can be seen in figure 5 that, since 2 persons P2, P3 are located in the overlapping fields of view of a plurality of image sensors, there are more zones with increased intensity (5 in this example) than there are persons actually in the room R.

The method includes, following the first preparation step, a step of locating persons in zones of the images. This step, as shown in figure 6b, leads to the identification of the zones in each of the images I1-I5, represented in this figure in the form of dotted bounding boxes, likely to contain people. On figure 6b, 5 bounding boxes are respectively defined by their pixel parameters BB11, BB12, BB21, BB41, BB51. The boxes are respectively positioned to enclose the zones I11, I12, I21, I41, I51 corresponding to the location of a person on figure 6a.

When the detectors D are corresponding to the one presented in the previous section of this description, this locating step can be implemented by the processing circuit PC of each detector, and in particular by a classifier K implemented by this circuit, to which the image has been communicated. In this case, each detector D uses the classifier K of its processing circuit PC to process the image provided by its image sensor **IS.** All the images prepared in the previous step are thus processed, during this locating step, in a distributed manner on the detectors D.

Alternatively, the locating step can be implemented by the computer system's processing unit PU. This approach requires an intermediate step of transferring the prepared images to this unit PU, via the transmission interfaces I/O of the detectors D. This does not however form the preferred approach, as it requires the transfer of a relatively large amount of information to this unit PU, but this is not excluded.

Whether the locating step is carried out in a distributed manner by the detectors D or centrally by the processing unit PU, at the end of this step a first series of zones BB11-BB51 are available, each zone located in an image being defined by pixel parameters in a coordinate system linked to this particular image.

As mentioned above, the zones identified during this step are preferably defined as bounding boxes, and the pixel parameters of such a zone preferentially include the coordinates of a reference point (e.g. the pixel coordinates of the center) of the bounding box and at least one pixel dimension of this box (one side if this box is square, one length and one width if this box is rectangular). The parameters can also be augmented to include an orientation angle of the bounding box and/or a degree of presumption of the presence of a person in this box (typically a value between 0 and 1). It should be noted that at this step, a same person, for example the person referenced P2 in figure 5, can be located in two zones of two distinct overlapping images, the bounding boxes referenced BB12 and BB21 in figure 6b.

In a subsequent "transformation" step, the pixel parameters of the zones of the first series of zones are transformed using the detectors parameters, to establish second parameters of these zones, the second parameters being expressed in the coordinate system linked to the room. In other words, the detector parameters (the position and attitude of a detector D in the coordinate system linked to the room, but also all other parameters including the intrinsic parameters and distortion parameters) are used to transform the pixel parameters of the zones (in a coordinate system specific to each image) into parameters that are expressed in the coordinate system linked to the room.

Preferably this transformation is carried out by the processing unit PU and therefore, between the locating step and the transformation step, a step of transmitting the pixel parameters of the zones identified by the plurality of detectors D to the processing unit PU is implemented. It should be noted that this transmission requires much less bandwidth than would have been necessary for the transmission of the complete images. This therefore makes it possible to limit the use of the computer system's network and thus, at constant capacity, to increase the number of detectors D in the system or the image capture frequency.

Alternatively, this transformation can be provided by the processing circuitry PC of each detector D. In this case, for example, during the preliminary initialization stage of the computer system, the detector parameters of each detector, i.e. at least the position of detector D in the coordinate system linked to the room and preferably all the image sensor parameters, will have been transmitted to the processing circuitry PC of each detector D. The detector D can then combine this information with the attitude parameters provided by the attitude sensor OS, to be able to execute the transformation step. The second parameters describing, in the coordinate system linked to the room, the zones likely to contain people are then transmitted to the processing unit PC by each of the detector's transmission circuits I/O.

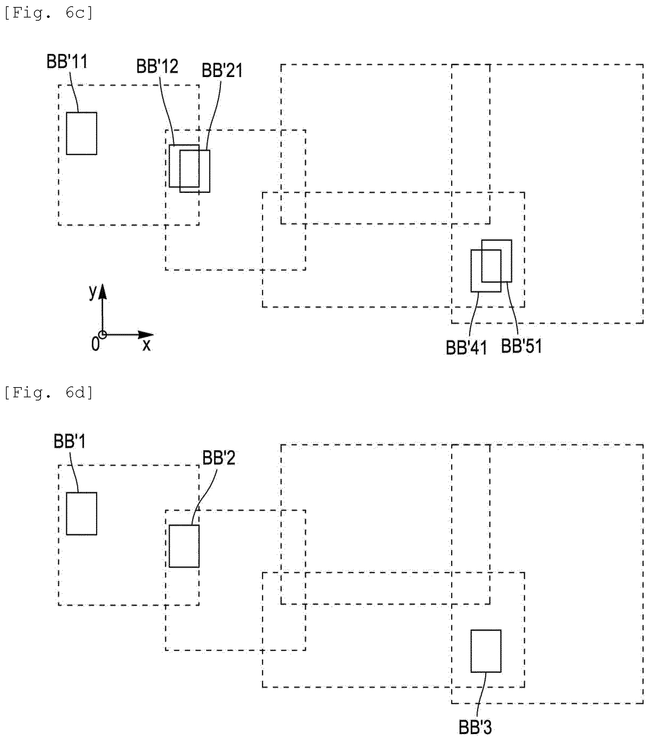

At the end of this step, and regardless of the approach chosen, the second parameters of the zones likely to contain people are available at the processing unit PU. These parameters are expressed in a same coordinate system linked to the room, which makes it possible to represent them in a same reference as shown in figure 6c. As can be seen on this figure, among the 5 zones of the first series of zones, the two zones referenced BB'12 and BB'21 and the two zones referenced BB'41, BB'51 correspond respectively to approximately the same regions of the room R.

Finally, following the transformation step, the method includes a step of disambiguation of the zones of the first series of zones that overlap. This step can notably implement a non-maximum suppression method, well known in itself in the field of computer vision, and which can be found in details in the document "Non-Maximum Suppression for Object Detection by Passing Messages between Windows", April 2015, Asian Conference on Computer Vision. This step aims at eliminating duplicate zones, i.e. zones present originally in the overlapping parts of two separate images, which in fact correspond to the same person. This step is achieved by processing the second parameters, in the coordinate system linked to the room, to provide a second series of zones that do not contain "duplicate" zones. This second series of zones therefore corresponds to the first series from which redundant zones corresponding to a same person present in the overlapping fields of view of two detectors D have been filtered out. The second series of zones established during this step of disambiguation is therefore representative of the position of the persons occupying the room, and the number of zones in this second series therefore corresponds to the number of persons present in the room. On figure 6d, 3 bounding boxes BB'1, BB'2, BB'3 are composing the second series of zones after application of the disambiguation step to the first series of zones shown in figure 6c. Three bounding boxes BB'1, BB'2, BB'3 are respectively placed in correspondence (and in a same coordinate system) with the 3 persons represented in figure 5. It is therefore possible to detect the presence of these 3 persons, to count them and to locate them.

As already mentioned, the preparation, locating, transformation and disambiguation steps can be repeated cyclically, in order to keep the room occupancy information up to date.

It should be noted that the disambiguation step, to be effective, requires that located zones from different overlapping images (corresponding to the same person located in the room R) are superimposed on each other with a good precision after transformation of their pixel parameters in the coordinate system linked to the room. This precision is made possible, according to the invention, by the precise determination of the attitude of the detectors (and more precisely the attitude of the image sensors of these detectors) in the room by means of the attitude sensor AS. Such precision could not be easily obtained by a simple visual measurement of this attitude.

Moreover, it is noted that the detection process does not require to transfer images in the computer system network, nor to register the images in-between them to take into account their overlap. Such registration could have been computationally cumbersome to implement.

Of course, the invention is not limited to the described modes of implementation and one can add variations of implementation without going beyond the scope of the invention as defined by the claims.

## Claims

1. A method for detecting occupancy of a room (R), the method being implemented by a computer system comprising a processing unit (PU) and a plurality of detectors (D) distributed in zenithal position in the room (R), each of the detector (D) comprising an image sensor (IS) and an attitude sensor (OS) providing attitude parameters, a position and the attitude parameters of each detector (D) in the room defining detector parameters stored in the computer system, at least some of the attitude parameters (A_{D}) of each detector (D) being provided by the attitude sensors (OS) of the detector (D), the method comprising:
- a step of preparing, at a given instant, a plurality of zenithal images (I) of the room (R), the plurality of images (I) being prepared by the plurality of image sensors (IS), at least some of the image sensors (IS) having overlapping fields of view;
- a step of locating persons in zones of the plurality of images (I) to establish a first series of zones, each zone located in an image (I) being defined by pixel parameters in a coordinate system linked to that image;
- a step of transforming the pixel parameters of the zones of the first series of zones using the detector parameters, to establish second parameters of the zones of the first series of zones, these second parameters being defined in a coordinate system linked to the room (R);
- a step of disambiguation of overlapping zones of the first series of zones by processing the second parameters to provide a second series of zones, the second series of zones being representative of the number and of the position of the persons occupying the room.

2. Method for detecting occupancy of a room (R) according to the preceding claim 1 wherein the pixel parameters of a zone located in an image (I) comprise the coordinates of a reference point of a bounding box (BB) in the image (I) and at least one dimension of the bounding box (BB).

3. Method for detecting occupancy of a room (R) according to the preceding claim 2 wherein the at least one dimension comprises width, height and/or orientation angle of the bounding box (BB).

4. A method for detecting occupancy of a room (R) according to the preceding claim 3 wherein the pixel parameters of a zone located in an image (I) also include a degree of presumption of the presence of a person in the bounding box.

5. Method for detecting occupancy of a room (R) according to one of the preceding claims 1 to 4 in which the locating step is implemented by at least one classifier (K) receiving as input at least one image (I) of the plurality of images and providing as output the pixel parameters of at least one zone located in this image (I).

6. Method for detecting occupancy of a room (R) according to the preceding claim 5, comprising a plurality of classifiers (K) implemented by a plurality of processing circuits (PC) of the plurality of detectors (D), a classifier (K) implemented by a processing circuit (PC) of a given detector (D) receiving as input an image (I) provided by the given detector image sensor (IS) and providing as output the pixel parameters of at least one zone in this image (I).

7. Method for detecting occupancy of a room (R) according to the preceding claim 6 in which the detectors (D) each comprise a transmission interface (I/O) connected to the processing unit (PU) of the computer system, the processing unit (PU) being configured to implement at least the disambiguation step.

8. Method for detecting occupancy of a room (R) according to the preceding claim 7 further comprising a step of transmitting the pixel parameters of the zones identified by the plurality of detectors (D) to the processing unit (PU).

9. Method for detecting occupancy of a room (R) according to claim 8 further comprising an initialization step of transmitting the detectors parameters to the processing unit (PU) and wherein the processing unit (PU) is configured to perform the transformation step.

10. Method for detecting occupancy of a room (R) according to one of claims 6 and 7 wherein the processing circuit (PC) is also configured to implement the transformation step and the detection method comprises the transmission of the second parameters to the processing unit (PU).

11. Method for detecting occupancy of a room (R) according to one of the preceding claims 1 to 10 wherein at least some of the plurality of detectors (D) include an attitude sensor (OS), the attitude sensor (OS) establishing at least a portion of the sensor parameters.

12. Room occupancy detector (D), comprising:
- an image sensor (IS);
- a processing circuit (PC) connected to the image sensor (IS), the processing circuit (PC) being configured to locate at least one zone likely to contain a person in an image (I) provided by the image sensor (IS), each zone located in the image (I) being defined by pixel parameters in a coordinate system linked to that image;
- an attitude sensor (OS), the attitude sensor (OS) establishing at least a part of an orientation of the image sensor (IS) in a world coordinate system;
- a transmission interface (I/O) to connect the detector (D) to a processing unit (PU) of a computer system.

13. Room occupancy detector (D) according to the previous claim 12, wherein the processing circuit (PC) is also configured to transform the pixel parameters defining the at least one zone, based upon the detector parameters, into second parameters of the at least one zone, these second parameters being defined in a coordinate system linked to the room (R).

14. Room occupancy detector (D) according to one of claims 12 to 13 in which the pixel parameters of a zone located in an image (I) include the coordinates and at least one dimension of a bounding box (BB) of the image (I).

15. Room occupancy detector (D) according to one of claims 12 to 14 in which the processing circuit (PC) implements a classifier (K), for example a neural network of the SSD or YOLO type.

## Patentansprüche

1. Verfahren zum Erkennen einer Belegung eines Raumes (R), wobei das Verfahren durch ein Computersystem implementiert wird, das eine Verarbeitungseinheit (PU) und eine Vielzahl von Detektoren (D) umfasst, die in einer zenitalen Position in dem Raum (R) verteilt sind, wobei jeder der Detektoren (D) einen Bildsensor (IS) und einen Lagesensor (OS) umfasst, die mehrere Lageparameter, eine Position und die Lageparameter von jedem Detektor (D) in dem Raum bereitstellen, die ihrerseits Detektorparameter definieren, die in dem Computersystem gespeichert werden, wobei mindestens einige der Lageparameter (A_{D}) von jedem Detektor (D) von den Lagesensoren (OS) des Detektors (D) bereitgestellt werden, wobei das Verfahren umfasst:
- einen Schritt eines Vorbereitens, zu einem gegebenen Zeitpunkt, einer Vielzahl von zenitalen Bildern (I) des Raumes (R), wobei die Vielzahl von Bildern (I) von der Vielzahl von Bildsensoren (IS) vorbereitet werden, wobei mindestens einige der Bildsensoren (IS) überlappende Blickfelder aufweisen;
- einen Schritt eines Lokalisierens von Personen in Zonen der Vielzahl von Bildern (I), um eine erste Reihe von Zonen festzulegen, wobei jede Zone, die sich in einem Bild (I) befindet, durch Pixelparameter in einem Koordinatensystem definiert wird, das mit diesem Bild verknüpft ist;
- einen Schritt eines Transformierens der Pixelparameter der Zonen der ersten Reihe von Zonen unter Verwendung der Detektorparameter, um zweite Parameter der Zonen der ersten Reihe von Zonen festzulegen, wobei diese zweiten Parameter in einem Koordinatensystem definiert werden, das mit dem Raum (R) verknüpft ist;
- einen Schritt eines Entflechtens von sich überlappenden Zonen der ersten Reihe von Zonen, indem die zweiten Parameter verarbeitet werden, um eine zweite Reihe von Zonen bereitzustellen, wobei die zweite Reihe von Zonen repräsentativ für die Anzahl und die Position der Personen ist, die den Raum belegen.

2. Verfahren zum Erkennen einer Belegung eines Raums (R) nach dem vorhergehenden Anspruch 1, wobei die Pixelparameter einer Zone, die sich in einem Bild (I) befindet, die Koordinaten eines Referenzpunkts eines Begrenzungsrahmens (BB) in dem Bild (I) und mindestens eine Dimension des Begrenzungsrahmens (BB) umfassen.

3. Verfahren zum Erkennen einer Belegung eines Raums (R) nach dem vorhergehenden Anspruch 2, wobei die mindestens eine Abmessung eine Breite, eine Höhe und/oder einen Orientierungswinkel des Begrenzungsrahmens (BB) umfasst.

4. Verfahren zum Erkennen einer Belegung eines Raumes (R) nach dem vorhergehenden Anspruch 3, wobei die Pixelparameter einer Zone, die sich in einem Bild (I) befindet, auch einen Wahrscheinlichkeitsgrad für die Anwesenheit einer Person in dem Begrenzungsrahmen beinhalten.

5. Verfahren zum Erkennen einer Belegung eines Raumes (R) nach einem der vorhergehenden Ansprüche 1 bis 4, wobei der Lokalisierungsschritt durch mindestens einen Klassifizierer (K) implementiert wird, der als Eingabe mindestens ein Bild (I) der Vielzahl von Bildern empfängt und als Ausgabe die Pixelparameter von mindestens einer Zone bereitstellt, die sich in diesem Bild (I) befindet.

6. Verfahren zum Erkennen einer Belegung eines Raums (R) nach dem vorhergehenden Anspruch 5, das eine Vielzahl von Klassifizierern (K) umfasst, die durch eine Vielzahl von Verarbeitungsschaltungen (PC) der Vielzahl von Detektoren (D) implementiert werden, wobei ein Klassifizierer (K), der durch eine Verarbeitungsschaltung (PC) eines gegebenen Detektors (D) implementiert wird, als Eingabe ein Bild (I) empfängt, das durch den gegebenen Detektorbildsensor (IS) bereitgestellt wird, und als Ausgabe die Pixelparameter von mindestens einer Zone in diesem Bild (I) bereitstellt.

7. Verfahren zum Erkennen einer Belegung eines Raumes (R) nach dem vorhergehenden Anspruch 6, wobei die Detektoren (D) jeweils eine Übertragungsschnittstelle (I/0) umfassen, die mit der Verarbeitungseinheit (PU) des Computersystems verbunden ist, wobei die Verarbeitungseinheit (PU) konfiguriert ist, um mindestens den Entflechtungsschritt zu implementieren.

8. Verfahren zum Erkennen einer Belegung eines Raumes (R) nach dem vorhergehenden Anspruch 7, das ferner einen Schritt eines Übertragens der Pixelparameter der Zonen, die durch die Vielzahl von Detektoren (D) identifiziert werden, zu der Verarbeitungseinheit (PU) umfasst.

9. Verfahren zum Erkennen einer Belegung eines Raumes (R) nach Anspruch 8, das ferner einen Initialisierungsschritt zum Übertragen der Detektorparameter zu der Verarbeitungseinheit (PU) umfasst und wobei die Verarbeitungseinheit (PU) konfiguriert ist zum Durchführen des Transformationsschritts.

10. Verfahren zum Erkennen einer Belegung eines Raums (R) nach einem der Ansprüche 6 und 7, wobei die Verarbeitungsschaltung (PC) auch konfiguriert ist, um den Transformationsschritt zu implementieren, und wobei das Erkennungsverfahren die Übertragung der zweiten Parameter zu der Verarbeitungseinheit (PU) umfasst.

11. Verfahren zum Erkennen einer Belegung eines Raums (R) nach einem der vorhergehenden Ansprüche 1 bis 10, wobei mindestens einige aus der Vielzahl von Detektoren (D) einen Lagesensor (OS) beinhalten, wobei der Lagesensor (OS) mindestens einen Teil der Sensorparameter festlegt.

12. Raumbelegungsdetektor (D), umfassend:
- einen Bildsensor (IS);
- eine Verarbeitungsschaltung (PC), die mit dem Bildsensor (IS) verbunden ist, wobei die Verarbeitungsschaltung (PC) konfiguriert ist, um mindestens eine Zone zu lokalisieren, die wahrscheinlich eine Person in einem Bild (I) enthält, das von dem Bildsensor (IS) bereitgestellt wird, wobei jede Zone, die sich in dem Bild (I) befindet, durch Pixelparameter in einem Koordinatensystem definiert wird, das mit diesem Bild verknüpft ist;
- einen Lagesensor (OS), wobei der Lagesensor (OS) mindestens einen Teil einer Orientierung des Bildsensors (IS) in einem Weltkoordinatensystem festlegt;
- eine Übertragungsschnittstelle (E/A) zum Verbinden des Detektors (D) mit einer Verarbeitungseinheit (PU) eines Computersystems.

13. Raumbelegungsdetektor (D) nach dem vorhergehenden Anspruch 12, wobei die Verarbeitungsschaltung (PC) auch konfiguriert ist, um die Pixelparameter, welche die mindestens eine Zone definieren, basierend auf den Detektorparametern, in zweite Parameter der mindestens einen Zone zu transformieren, wobei diese zweiten Parameter in einem Koordinatensystem definiert sind, das mit dem Raum (R) verknüpft ist.

14. Raumbelegungsdetektor (D) nach einem der Ansprüche 12 bis 13, wobei die Pixelparameter einer Zone, die sich in einem Bild (I) befindet, die Koordinaten und mindestens eine Dimension eines Begrenzungsrahmens (BB) des Bildes (I) beinhalten.

15. Raumbelegungsdetektor (D) nach einem der Ansprüche 12 bis 14, wobei die Verarbeitungsschaltung (PC) einen Klassifizierer (K), zum Beispiel ein neuronales Netzwerk vom SSD- oder YOLO-Typ, implementiert.

## Revendications

1. Procédé pour détecter l'occupation d'une salle (R), le procédé étant mis en œuvre par un système d'ordinateur comprenant une unité de traitement (PU) et une pluralité de détecteurs (D) distribués dans une position zénithale dans la salle (R), chacun des détecteurs (D) comprenant un capteur d'image (IS) et un capteur d'attitude (OS) fournissant des paramètres d'attitude, une position et les paramètres d'attitude de chaque détecteur (D) dans la salle définissant des paramètres de détecteur stockés dans le système d'ordinateur, au moins certains des paramètres d'attitude (AD) de chaque détecteur (D) étant fournis par les capteurs d'attitude (OS) du détecteur (D), le procédé comprenant :
- une étape de préparation, à un instant donné, d'une pluralité d'images zénithales (I) de la salle (R), la pluralité d'images (I) étant préparées par la pluralité de capteurs d'image (IS), au moins certains des capteurs d'image (IS) ayant des champs de visée en chevauchement ;
- une étape de localisation de personnes dans des zones de la pluralité d'images (I) pour établir une première série de zones, chaque zone localisée dans une image (I) étant définie par des paramètres de pixel dans un système de coordonnées lié à cette image ;
- une étape de transformation des paramètres de pixel des zones de la première série de zones en utilisant les paramètres de détecteur, pour établir des seconds paramètres des zones de la première série de zones, ces seconds paramètres étant définis dans un système de coordonnées lié à la salle (R) ;
- une étape de désambiguïsation de zones en chevauchement de la première série de zones en traitant les seconds paramètres pour fournir une seconde série de zones, la seconde série de zones étant représentative du nombre et de la position des personnes occupant la salle.

2. Procédé pour détecter l'occupation d'une salle (R) selon la revendication précédente 1, dans lequel les paramètres de pixel d'une zone localisée dans une image (I) comprennent les coordonnées d'un point de référence d'une boîte de délimitation (BB) dans l'image (I) et au moins une dimension de la boîte de délimitation (BB).

3. Procédé pour détecter l'occupation d'une salle (R) selon la revendication précédente 2, dans lequel l'au moins une dimension comprend une largeur, une hauteur, et/ou un angle d'orientation de la boîte de délimitation (BB).

4. Procédé pour détecter l'occupation d'une salle (R) selon la revendication précédente 3, dans lequel les paramètres de pixel d'une zone localisée dans une image (I) incluent également un degré de présomption de la présence d'une personne dans la boîte de délimitation.

5. Procédé pour détecter l'occupation d'une salle (R) selon l'une des revendications précédentes 1 à 4, dans lequel l'étape de localisation est mise en œuvre par au moins un classifieur (K) recevant, en tant qu'entrée, au moins une image (I) de la pluralité d'images et fournissant, en tant que sortie, les paramètres de pixel d'au moins une zone localisée dans cette image (I).

6. Procédé pour détecter l'occupation d'une salle (R) selon la revendication précédente 5, comprenant une pluralité de classifieurs (K) mis en œuvre par une pluralité de circuits de traitement (PC) de la pluralité de détecteurs (D), un classifieur (K) mis en œuvre par un circuit de traitement (PC) d'un détecteur donné (D) recevant, en tant qu'entrée, une image (I) fournie par le capteur d'image de détecteur donné (IS) et fournissant, en tant que sortie, les paramètres de pixel d'au moins une zone dans cette image (I).

7. Procédé pour détecter l'occupation d'une salle (R) selon la revendication précédente 6, dans lequel les détecteurs (D) comprennent chacun une interface de transmission (I/0) connectée à l'unité de traitement (PU) du système d'ordinateur, l'unité de traitement (PU) étant configurée pour mettre en œuvre au moins l'étape de désambiguïsation.

8. Procédé pour détecter l'occupation d'une salle (R) selon la revendication précédente 7, comprenant en outre une étape de transmission des paramètres de pixel des zones identifiées par la pluralité de détecteurs (D) à l'unité de traitement (PU).

9. Procédé pour détecter l'occupation d'une salle (R) selon la revendication 8, comprenant en outre une étape d'initialisation de la transmission des paramètres de détecteurs à l'unité de traitement (PU) et dans lequel l'unité de traitement (PU) est configurée pour réaliser l'étape de transformation.

10. Procédé pour détecter l'occupation d'une salle (R) selon l'une des revendications 6 et 7, dans lequel le circuit de traitement (PC) est également configuré pour mettre en œuvre l'étape de transformation et le procédé de détection comprend la transmission des seconds paramètres à l'unité de traitement (PU).

11. Procédé pour détecter l'occupation d'une salle (R) selon l'une des revendications précédentes 1 à 10, dans lequel au moins certains de la pluralité de détecteurs (D) incluent un capteur d'attitude (OS), le capteur d'attitude (OS) établissant au moins une portion des paramètres de capteur.

12. Détecteur d'occupation de salle (D), comprenant :
- un capteur d'image (IS) ;
- un circuit de traitement (PC) connecté au capteur d'image (IS), le circuit de traitement (PC) étant configuré pour localiser au moins une zone contenant vraisemblablement une personne dans une image (I) fournie par le capteur d'image (IS), chaque zone localisée dans l'image (I) étant définie par des paramètres de pixel dans un système de coordonnées lié à cette image ;
- un capteur d'attitude (OS), le capteur d'attitude (OS) établissant au moins une partie d'une orientation du capteur d'image (IS) dans un système de coordonnées mondial ;
- une interface de transmission (I/O) pour connecter le détecteur (D) à une unité de traitement (PU) d'un système d'ordinateur.

13. Détecteur d'occupation de salle (D) selon la revendication précédente 12, dans lequel le circuit de traitement (PC) est également configuré pour transformer les paramètres de pixel définissant l'au moins une zone, sur la base des paramètres de détecteur, en seconds paramètres de l'au moins une zone, ces seconds paramètres étant définis dans un système de coordonnées lié à la salle (R).

14. Détecteur d'occupation de salle (D) selon l'une des revendications 12 et 13 dans lequel les paramètres de pixel d'une zone localisée dans une image (I) incluent les coordonnées et au moins une dimension d'une boîte de délimitation (BB) de l'image (I).

15. Détecteur d'occupation de salle (D) selon l'une des revendications 12 à 14 dans lequel le circuit de traitement (PC) met en œuvre un classifieur (K), par exemple un réseau neuronal du type SSD ou YOLO.
